# EUROPÄISCHE PATENTSCHRIFT

(11) **EP 0 876 898 B1**
(45) Veröffentlichungstag und Bekanntmachung des Hinweises auf die Patenterteilung: **12.02.2003**
(21) Anmeldenummer: 98107190.5
(22) Anmeldetag: 21.04.1998
(51) Int. Cl.: B29C 53/54, B29C 53/50

(54) **Vorrichtung zur Herstellung eines Relining-Schlauchs**
Device for producing a relining tubular sheath
Dispositif pour fabriquer une gaine tubulaire

(30) Priorität: 06.05.1997 DE 19719063
(43) Veröffentlichungstag der Anmeldung: 11.11.1998
(73) Patentinhaber: BKP Berolina Polyester GmbH & Co. KG, 13591 Berlin (DE)
(72) Erfinder: Odenwald, Ralf, Dipl.-Ing., 16727 Velten (DE)
(74) Vertreter: KOHLER SCHMID + PARTNER

(56) Entgegenhaltungen:
- WO-A-94/25789
- AU-A- 8 410 375
- US-A- 2 660 219
- US-A- 2 756 458
- US-A- 3 406 612
- US-A- 3 729 359
- US-A- 3 813 313

## Beschreibung

Die Erfindung betrifft eine Vorrichtung zur Herstellung eines aus mehreren Lagen gebildeten Schlauchs, mit einem ortsfesten Wicklungskern, um den die einzelnen jeweils als Materialbahn zugeführten Lagen jeweils mittels einer Ümlenk- und Formeinrichtung mit ihren beiden Längsseiten überlappend gewickelt werden, wobei die um den Wicklungskern gewickelten Lagen in Längsrichtung des Wicklungskerns als Schlauch fort von der Vorrichtung gefördert werden.

Eine derartige Vorrichtung ist beispielsweise durch die DE 44 27 633 C2 bekanntgeworden.

Nicht begehbare schadhafte Rohrleitungen können im sogenannten Reliningverfahren saniert werden, wobei vor Ort ein mit aushärtbarem Kunstharz getränkter Schlauch in ein zu sanierendes Altrohr eingeführt, positioniert und vor Ort ausgehärtet wird.

Aus der DE 44 27 633 C2 ist eine Vorrichtung zum Herstellen eines solchen Relining-Schlauchs bekannt, bei der Materialbahnen über eine Umlenkrolle und ein Formblech auf einen ellipsenförmig ausgebildeten Wicklungskern derart geformt aufgebracht werden, daß jede Materialbahn den Wicklungskern überlappend umschlingt und eine Schlauchlage bildet. Dabei sind die Schlauchlagen jeweils über den Umfang des Schlauchs zueinander versetzt angeordnet. Der Wicklungskern ist entsprechend dem erforderlichen Schlauchdurchmesser in seiner Breite über zwei gegeneinander teleskopisch verschiebbare Kernhälften verstellbar. Abwicklungseinrichtungen, von denen die einzelnen Materialbahnen abgezogen werden, sind waagerecht und parallel zueinander orientiert, so daß die abgezogenen Materialbahnen entweder von oben oder von unten an den Wicklungskern herangeführt werden können. Bei einer Veränderung des Schlauchdurchmessers durch Verschieben der beiden Kernhälften müssen auch die Abwicklungseinrichtungen jeweils entsprechend verschoben und neu justiert werden, wobei unterschiedliche Abzugskräfte an den Längsseiten einer Materialbahn auftreten können, die nur schwer zu beherrschen sind und den Umwickelvorgang beeinträchtigen können. Ein Versatz von Materialbahnen im Seitenbereich des Wicklungskerns läßt sich daher mit der bekannten Vorrichtung nicht oder nur mit hohem zusätzlichen Aufwand herstellen.

Aus der US-A-3,813,313 ist ebenfalls eine Vorrichtung zur Herstellung eines solchen Relining-Schlauches bekannt. Dabei werden zwei als Materialbahnen zugeführte äußere Schlauchlagen um einen zuvor flachgedrückten Innenschlauch, der die innere Schlauchlage bildet, umgeschlagen und mit diesem in Förderrichtung transportiert. Im Querschnitt bildet der flachgedrückte Innenschlauch einen Wicklungskern, bei dem sich die Mittelsenkrechten jeder ebenen Außenfläche in einem gemeinsamen Schnittpunkt schneiden.

Es ist deshalb die Aufgabe der vorliegenden Erfindung, eine Vorrichtung der eingangs genannten Art derart weiterzubilden, daß Materialbahnen dem Wicklungskern unter möglichst beliebigen Winkeln bezüglich der Förderrichtung des Schlauchs zugeführt werden können.

Diese Aufgabe wird erfindungsgemäß dadurch gelöst, daß der Wicklungskern in Umfangsrichtung von einem die Umlenk- und Formeinrichtung bildenden Umlenkbügel zumindest teilweise, vorzusweise vollständig, umgeben ist, mit welchem eine dem Wicklungskern zugeführte Materialbahn um diesen herum zu einer Lage umschlagbar ist. Bevorzugt ist der Außenquerschnitt des Wicklungskerns dazu zumindest abschnittsweise, vorzugsweise vollständig, als regelmäßiges Vieleck ausgebildet oder kreisrund, wobei auch beliebige Kombinationen dieser beiden .Querschnittsformen möglich sind.

Diese erfindungsgemäße Außenquerschnittsform des Wicklungskerns hat den wesentlichen Vorteil, daß Materialbahnen dem Wicklungskern so, insbesondere mittig, zugeführt werden können, daß die Mittelsenkrechten jeder auf der ebenen oder gekrümmten Außenfläche des Wicklungskerns aufliegenden Überlappung jeweils durch den gemeinsamen Schnittpunkt verlaufen. Dadurch sind die dabei an den beiden Längsseiten einer Materialbahn wirkenden Querkräfte gleich groß und kompensieren sich gegenseitig. So kann z.B. ein mehrlagiger Schlauch mit gleichmäßig um seinen Umfang versetzt angeordneten Überlappungen der einzelnen Lagen hergestellt werden. Bei einer rotationssymmetrischen Anordnung bzw. bei kreisrundem Außenquerschnitt können die Materialbahnen unter beliebigen Umfangswinkeln dem Wicklungskern zugeführt werden. Abwickeleinrichtungen brauchen bei Änderungen des Schlauchdurchmessers lediglich radial verstellt zu werden. Aufgrund der Rotationssymmetrie kann der Umfangbügel in beliebiger Umfangsrichtung orientiert angeordnet werden.

Besonders bevorzugt weist der Wicklungskern eine kreiszylinderförmige Außenoberfläche auf und ist der Wicklungskern dazu als Kernrohr mit kreisrundem Außenquerschnitt ausgebildet, wodurch innerhalb des Kernrohrs z.B. Versorgungsleitungen o.ä. geführt werden können.

Wenn in weiterer Ausführungsform eine entgegen der Förderrichtung zugeführte Materialbahn durch die Umlenkeinrichtung in Förderrichtung, vorzugsweise um mehr als 90°, umlenkbar ist, kann das Umschlagen der Materialbahnen um den Wicklungskern vereinfacht werden. Denn je stärker die zugeführte Materialbahn umgelenkt wird, desto einfacher kann die um den Wicklungskern herum umgeschlagene Materialbahn mit gleichbleibender Überlappung als Schlauch in Förderrichtung abgezogen werden.

Bei ganz besonders bevorzugten Ausführungsformen der Erfindung sind, in Förderrichtung des Schlauchs gesehen, stromabwärts der jeweiligen Umlenk- und Formeinrichtung weiterhin Mittel vorgesehen, die jeweils eine um den Wicklungskern umgeschlagene Lage in Umfangsrichtung des Wicklungskerns straffen. Nach erfolgter Straffung ist jede Schlauchlage faltenlos bzw. glatt gezogen und liegen alle Schlauchlagen eng aneinander an.

Eine weitere bevorzugte Ausführungsform ist dadurch gekennzeichnet, daß die beiden Längsseiten jeder um den Wicklungskern umgeschlagenen Lage in Richtung einer Überlappung aufeinanderzu kraftbeaufschlagt sind. So kann sichergestellt werden, daß eine z.B. mittels des Umlenkbügels überlappend um den Wicklungskern umgeschlagene Materialbahn nicht in Förderrichtung auseinanderläuft, sondern um den Wicklungkern enganliegend bis möglichst zur maximal möglichen Überlappung in Förderrichtung abgezogen wird.

Als besonders vorteilhafte Weiterbildung dieser Ausführungsform kann für mindestens eine Längsseite einer um den Wicklungskern umgeschlagenen Lage jeweils eine in Richtung einer Überlappung beider Längsseiten wirkende Einrichtung vorgesehen sein. Vorzugsweise ist jeder Längsseite mindestens eine solche Einrichtung zugeordnet, um eine möglichst gleichbleibende und maximale Überlappung zu erreichen.

Dazu kann als vorteilhafte Ausgestaltung dieser Weiterbildung als in Richtung einer Überlappung wirkende Einrichtung eine radial von außen auf eine Längsseite drückende und gegenüber der Förderrichtung schräg gestellte, drehbar gelagerte Andruckrolle vorgesehen sein. Durch den Transport der gewickelten Lagen als Schlauch in Förderrichtung wird diese Andruckrolle bereits angetrieben und wirkt aufgrund ihrer Schrägstellung mit einer Kraftkomponente auch in Umfangsrichtung des Wicklungskerns auf die Längsseite und damit in Richtung einer Überlappung. Gegebenenfalls kann die Andrukkrolle auch extern z.B. über einen Motor oder einen Pneumatikantrieb angetrieben werden. Aufgrund der Rotationssymmetrie der gesamten Vorrichtung braucht die Andruckrolle bei Änderung des Wicklungskern-Durchmessers lediglich in radialer Richtung verstellt zu werden.

In einer anderen bevorzugten Weiterbildung ist unterhalb einer Längsseite einer um den Wicklungskern umgeschlagenen Lage im Bereich ihrer Beaufschlagung in Richtung einer Überlappung eine Auflagefläche vorgesehen, welche ein Gegenlager zur Abstützung der beaufschlagten Längsseite bildet. Dies ist insbesondere dann von Vorteil, wenn die unterhalb der zu beaufschlagenden Schlauchlage befindliche Schlauchlage aufgrund ihrer Oberflächenstruktur nicht als ausreichendes Auflager dienen kann, wie es z.B. bei Glasfaserbahnen der Fall ist.

Bevorzugt ist weiterhin die Umlenk- und Formeinrichtung, insbesondere der Umlenkbügel, und/oder die Auflagefläche über eine Halterung, insbesondere über einen Haltebügel, relativ zum Wicklungskern ortsfest gehalten.

Anstatt eine Schlauchlage mit externen Mitteln wie Andruckrollen in Richtung auf eine weiter gehende Überlappung zu straffen, ist es bei einer anderen, besonders vorteilhaften Ausführungsform vorgesehen, daß sich der Querschnitt des Wicklungskerns, in Förderrichtung des Schlauchs gesehen, stromabwärts der für die letzte Lage vorgesehenen Umlenkund Formeinrichtung erweitert. Die Materialbahn wird relativ lose mit Faltenwurf um den im Querschnitt gegenüber dem gewünschten Querschnitt noch reduzierten Wicklungskern geschlungen und erst durch entsprechende Aufweitung am Ende des Wicklungskerns (in Abzugs- bzw. Förderrichtung gesehen) auf den gewünschten Querschnitt gedehnt und die "Falten" herausgezogen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: eine perspektivische Seitenansicht einer ersten Ausführungsform der erfindungsgemäßen Vorrichtung mit zwei jeweils zu einer Schlauchlage umgeschlagenen Materialbahnen;
- Fig. 2: eine abgebrochene Draufsicht auf eine umgeschlagene Materialbahn im Bereich ihrer beiden überlappenden Längsseiten;
- Fig. 3: eine abgebrochene Längsansicht entsprechend III in Fig. 2;
- Fig. 4: im Querschnitt einen mit der erfindungsgemäßen Vorrichtung gefertigten mehrlagigen Schlauch; und
- Fig. 5: in einem Längsschnitt eine zweite Ausführungsform der erfindungsgemäßen Vorrichtung.

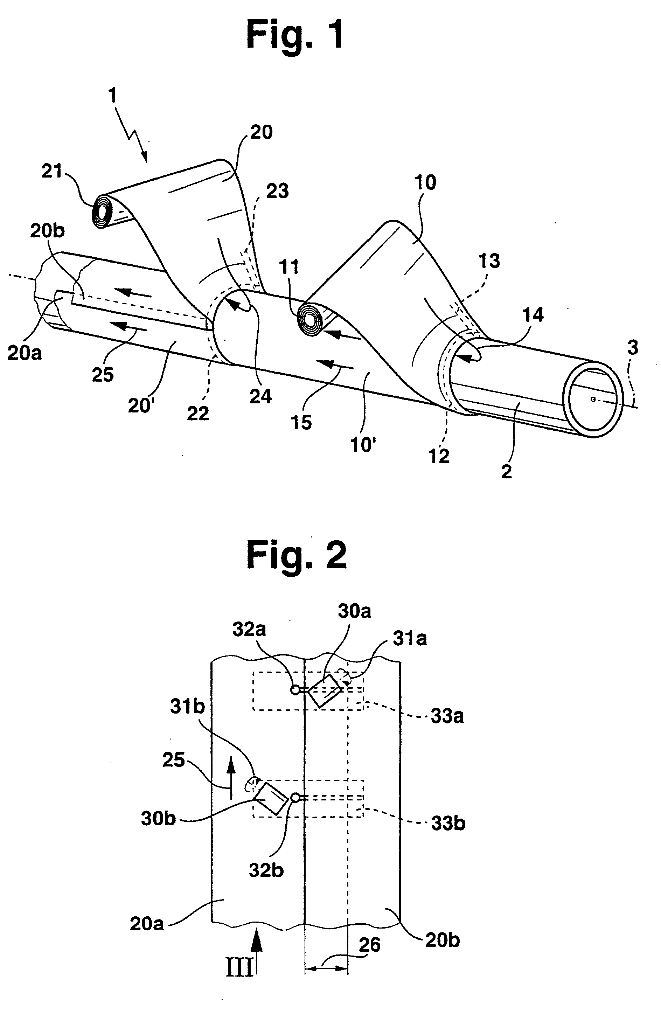

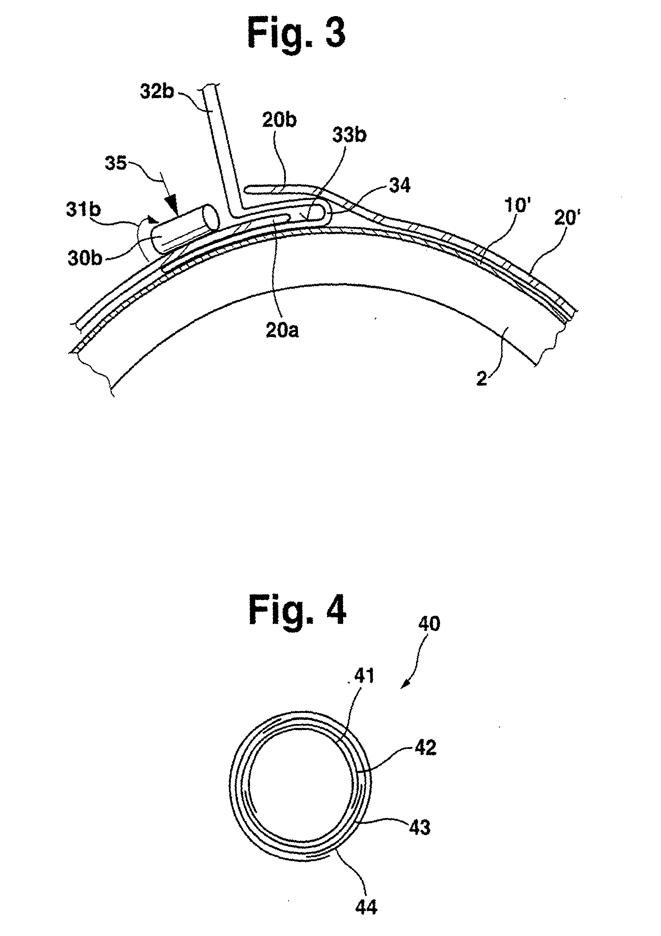

Die in Fig. 1 mit 1 bezeichnete Vorrichtung dient der Herstellung eines mehrlagigen Schlauchs 40 (Fig. 4) und weist ein Kernrohr 2 mit Symmetrieachse 3 auf, um das zwei zugeführte Materialbahnen 10, 20 jeweils zu einer Schlauchlage 10', 20' umgeschlagen werden.

Die beiden Materialbahnen 10, 20 werden von einer Abwickeleinrichtung 11, 21 in voller Breite abgezogen und jeweils mittels eines das Kernrohr 2 in Umfangsrichtung vollständig umgebenden Umlenkbügels 12, 22 um das Kernrohr 2 herum zu einer Schlauchlage 10', 20' umgeschlagen, wobei sie um etwa 135° umgelenkt werden, wie durch die Pfeile 14 und 24 angedeutet ist. Die Umlenkbügel 12, 22 sind mit Hilfe von Haltebügeln 13, 23 gegenüber dem Kernrohr 2 ortsfest gehalten, während die um das Kernrohr 2 umgeschlagenen Schlauchlagen 10', 20' in Längsrichtung (Abzugs- oder Förderrichtung 15, 25) des Kernrohrs 2 als Schlauch fort von der Vorrichtung 1 abgezogen werden. Wie in Fig. 1 für die zweite umgeschlagene Schlauchlage 20' gezeigt ist, überlappen jeweils die beiden Längsseiten 20a, 20b der umgeschlagenen Schlauchlagen 10' bzw. 20'.

Um die beiden Längsseiten einer Schlauchlage 10', 20' in ihrer Überlappung 26 (Fig. 2) zu halten bzw. in Richtung einer solchen Überlappung 26 zu beaufschlagen, ist jeder Längsseite 20a, 20b einer umgeschlagenen Schlauchlage 10', 20' eine Andruckrolle 30a, 30b zugeordnet, die eine Längsseite 20a, 20b in Umfangsrichtung des Kernrohrs 2 und in Abzugsrichtung 25 beaufschlagt. Dazu ist die drehbar gelagerte Andruckrolle 30a, 30b gegenüber der Abzugsrichtung 25 und der Umfangsrichtung schräg gestellt und drückt von außen radial in Pfeilrichtung 35 (Fig. 3) auf die Längsseite 20a, 20b. Durch den Transport der Schlauchlagen 10', 20' als Schlauch in Förderrichtung 15, 25 werden die Andruckrollen 30a, 30b in Drehrichtung 31a, 31b angetrieben und wirken aufgrund ihrer Schrägstellung auf die Längsseiten 20a, 20b auch mit einer Kraftkomponente in Umfangsrichtung des Kernrohrs 2 und damit in Richtung einer Überlappung 26.

Weiterhin ist jeder Andruckrolle 30a, 30b eine über einen Haltebügel 32a, 32b unterhalb der Längsseite 20a, 20b gehaltene Auflagefläche 33a, 33b zugeordnet, die als Gegenlager für die durch die Andruckrolle 30a, 30b radial nach innen gedrückte Schlauchlage 10', 20' dient.

Fig. 3 zeigt die Auflagefläche 33b für die untere Längsseite 20a der zweiten umgeschlagenen Schlauchlage 20', deren überlappte untere Längsseite 20a durch die in Drehrichtung 31b angetriebene Andruckrolle 30b in Umfangsrichtung in Richtung auf die andere Längsseite 20b beaufschlagt ist. Diese Auflagefläche 33b ist insbesondere dann hilfreich, wenn die unter der umgeschlagenen zweiten Schlauchlage 20' liegende erste umgeschlagene Schlauchlage 10' aufgrund einer zu rauhen Außenoberfläche nicht als Gegenlager für die zweite Schlauchlage 20' dienen kann. Ohne eine solche Auflagefläche besteht zudem die Gefahr, daß durch die Beaufschlagung der zweiten Schlauchlage 20' die Überlappung der zuvor zugeführten, darunterliegenden ersten Schlauchlage 10' wieder geöffnet wird. Über einen U-förmigen Bügel 34 und den Haltebügel 32b ist die Auflagefläche 33b ortsfest gegenüber dem Kernrohr 2 gehalten.

In Fig. 4 ist der Querschnitt eines mit der Vorrichtung 1 gefertigten mehrlagigen Schlauchs 40 gezeigt, der aus vier Schlauchlagen 41 bis 44 gebildet ist. Die beiden Längsseiten jeder einzelnen Schlauchlagen 41 bis 44 überlappen sich jeweils, wobei die Überlappungen in Umfangrichtung des Schlauchs 40 gleichmäßig versetzt zueinander angeordnet sind.

Die Fign. 3 und 4 zeigen weiterhin, daß die Mittelsenkrechten jeder auf der ebenen oder gekrümmten Außenfläche des Wicklungskerns aufliegenden Überlappung jeweils durch die Symmetrieachse 3 des Kernrohrs 2 verlaufen. Dadurch sind die insbesondere beim Umwickeln an den beiden Längsseiten einer Materialbahn wirkenden Querkräfte gleich groß und kompensieren sich gegenseitig.

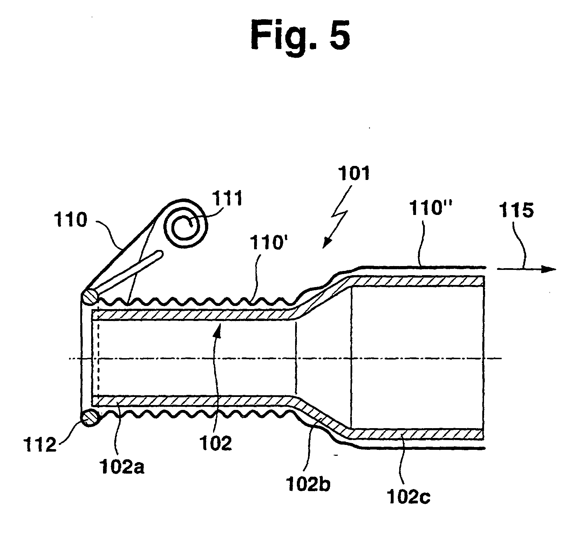

Bei der in Fig. 5 gezeigten zweiten Ausführungsform (Vorrichtung 101) wird von einer Abwickeleinrichtung 111 ebenfalls eine Materialbahn 110 in voller Breite abgezogen und mittels eines das Kernrohr 102 in Umfangsrichtung ringsum umgebenden Umlenkbügels 112 um das Kernrohr 102 herum zu einer Schlauchlage 110' umgeschlagen. Dabei ist im Vergleich zur Materialbahn 10 bei gleicher Breite der Materialbahn 110 der Umfang bzw. der Durchmesser des Kernrohrs 102 auf einem ersten Kernrohrabschnitt 102a gegenüber dem Durchmesser des Kernrohrs 2 bei der ersten Ausführungsform deutlich reduziert, so daß die umgeschlagene Materialbahn 110' relativ lose mit Faltenwurf um den ersten Kernrohrabschnitt 102a geschlungen ist. Indem sich das Kernrohr 102 auf einem zweiten Kernrohrabschnitt 102b allmählich in Förderrichtung 115 zu einem dritten Kernrohrabschnitt 102c mit dem gewünschten größeren Durchmesser aufweitet, wird die umgeschlagene Materialbahn 110' durch die im zweiten Kernrohrabschnitt 102b erfolgende Aufweitung auf den gewünschten Durchmesser gedehnt. Durch diese Aufweitung werden die "Falten" herausgezogen, so daß sich ab dem erweiterten Kernrohrabschnitt 102c eine faltenlose Schlauchlage 110" ergibt.

Zur Herstellung eines mehrlagigen Schlauchs, wie er in Fig. 4 gezeigt ist, werden zunächst alle Schlauchlagen mit Übermaß lose um das einen geringeren Querschnitt als der gewünschte Endquerschnitt aufweisende Kernrohr geschlungen. Erst am Ende, d.h. nach Umschlingen der letzten (äußeren) Schlauchlage erfolgt durch die Aufweitung des Kernrohrs eine gemeinsame Aufweitung aller Schlauchlagen und damit das Herausziehen aller in den einzelnen Schlauchlagen vorhandenen Falten.

Bei einer Vorrichtung 1 zur Herstellung eines aus mehreren Lagen 10', 20' gebildeten Schlauchs, mit einem Wicklungskern, um den die einzelnen jeweils als Materialbahn 10, 20 zugeführten Lagen 10', 20' jeweils mittels einer Umlenkund Formeinrichtung mit ihren beiden Längsseiten 20a, 20b überlappend gewickelt werden, wobei die um den Wicklungskern gewickelten Lagen 10', 20' in Längsrichtung des Wicklungskerns als Schlauch fort von der Vorrichtung 1 gefördert werden, schneiden sich im Querschnitt die Mittelsenkrechten jeder ebenen Außenfläche des Wicklungskerns und die Normalen jeder an eine gekrümmte Außenfläche des Wicklungskerns gelegten Tangente in einem gemeinsamen Schnittpunkt. Vorzugsweise ist der Wicklungskern ein Kernrohr 2 mit kreisrundem Außenquerschnitt. Dadurch sind die dabei an den beiden Längsseiten 20a, 20b einer Materialbahn 10, 20 wirkenden Abzugskräfte gleich groß, so daß sich an der Materialbahn wirkende Querkräfte kompensieren.

## Patentansprüche

1. Vorrichtung (1; 101) zur Herstellung eines aus mehreren Lagen (10', 20'; 41, 42, 43, 44; 110', 110'') gebildeten Schlauchs (40), mit einem ortsfesten Wicklungskern, um den die einzelnen jeweils als Materialbahn (10, 20; 110) zugeführten Lagen (10', 20'; 110', 110'') jeweils mittels einer Umlenk- und Formeinrichtung mit ihren beiden Längsseiten (20a, 20b) überlappend gewickelt werden, wobei die um den Wicklungskern gewickelten Lagen (10', 20'; 110', 110") in Längsrichtung des Wicklungskerns als Schlauch (40) fort von der Vorrichtung (1; 101) gefördert werden, wobei
sich im Querschnitt die Mittelsenkrechten jeder ebenen Außenfläche des Wicklungskerns und die Normalen jeder an eine gekrümmte Außenfläche des Wicklungskerns gelegten Tangente in einem gemeinsamen Schnittpunkt schneiden, **dadurch gekennzeichnet, daß** der Wicklungskern in Umfangsrichtung von einem die Umlenk- und Formeinrichtung bildenden Umlenkbügel (12, 22; 112) zumindest. teilweise, vorzusweise vollständig, umgeben ist, mit welchem eine dem Wicklungskern zugeführte Materialbahn (10, 20; 110) um diesen herum zu einer Lage (10', 20'; 110', 110'') umschlagbar ist.

2. Vorrichtung nach Anspruch 1, **dadurch gekennzeichnet, daß** der Außenquerschnitt des Wicklungskerns zumindest abschnittsweise als regelmäßiges Vieleck oder kreisrund ausgebildet ist.

3. Vorrichtung nach einem der vorhergehenden Ansprüche, **dadurch gekennzeichnet, daß** eine entgegen der Förderrichtung (15, 25; 115) zugeführte Materialbahn (10, 20; 110) durch die Umlenkeinrichtung in Förderrichtung (15, 25; 115), vorzugsweise um mehr als 90°, umlenkbar (14, 24) ist.

4. Vorrichtung nach einem der vorhergehenden Ansprüche, **dadurch gekennzeichnet, daß**, in Förderrichtung (15, 25; 115) des Schlauchs (40) gesehen, stromabwärts der jeweiligen Umlenk- und Formeinrichtung weiterhin Mittel vorgesehen sind, die jeweils eine um den Wicklungskern umgeschlagene Lage (10', 20'; 110', 110") in Umfangsrichtung des Wicklungskerns straffen.

5. Vorrichtung nach Anspruch 4, **dadurch gekennzeichnet, daß** die beiden Längsseiten (20a, 20b) jeder um den Wicklungskern umgeschlagenen Lage (10', 20') in Richtung einer Überlappung (26) aufeinanderzu kraftbeaufschlagt sind.

6. Vorrichtung nach Anspruch 5, **dadurch gekennzeichnet, daß** für mindestens eine Längsseite (20a, 20b) einer um den Wicklungskern umgeschlagenen Lage (10', 20') jeweils eine in Richtung einer Überlappung (26) beider Längsseiten (20a, 20b) wirkende Einrichtung vorgesehen ist.

7. Vorrichtung nach Anspruch 6, **dadurch gekennzeichnet, daß** als in Richtung einer Überlappung (26) wirkende Einrichtung eine radial von außen auf eine Längsseite (20a, 20b) drückende und gegenüber der Förderrichtung (15, 25) schräg gestellte, drehbar gelagerte Andruckrolle (30a, 30b) vorgesehen ist.

8. Vorrichtung nach einem der Ansprüche 5 bis 7, **dadurch gekennzeichnet, daß** unterhalb einer Längsseite (20a, 20b) einer um den Wicklungskern umgeschlagenen Lage (10', 20') im Bereich ihrer Beaufschlagung in Richtung einer Überlappung (26) eine Auflagefläche (33a, 33b) vorgesehen ist.

9. Vorrichtung nach Anspruch 4, **dadurch gekennzeichnet, daß** sich der Querschnitt des Wicklungskerns, in Förderrichtung (15, 25; 115) des Schlauchs (40) gesehen, stromabwärts der für die letzte Lage (20'; 110', 110") vorgesehenen Umlenk- und Formeinrichtung erweitert.

## Claims

1. An apparatus (1; 101) for producing a tube (40) consisting of a plurality of layers (10', 20'; 41, 42, 43, 44; 110', 110"), with a fixed winding core about which the individual layers (10', 20'; 110', 110") fed as respective webs (10, 20; 110) of material are respectively wound by a deflecting and shaping means so that their two longitudinal sides (20a, 20b) overlap, whereby the layers (10', 20'; 110', 110") wound around the winding core are in the longitudinal direction of the winding core conveyed as a tube (40) away from the apparatus (1; 101) whereby, in cross-section, the mid-perpendicular of each plane outer surface of the winding core and the perpendicular of each tangent on a curved outer surface of the winding core intersect at a common point, **characterised in that** the winding core is in the peripheral direction at least partially and preferably completely enclosed by a deflecting bracket (12, 22; 112) constituting the deflecting and shaping means, with which a material web (10, 20; 110) fed to the winding core can be laid around this latter in one layer (10', 20'; 110', 110").

2. An apparatus according to claim 1, **characterised in that** the outer cross-section of the winding core has at least portions constructed as a regular polygon or circle.

3. An apparatus according to one of the preceding claims, **characterised in that** a material web (10, 20; 110) fed against the direction of conveyance (15, 25; 115) can be deflected preferably by more than 90° into the direction of conveyance (15, 25; 115) by the deflecting means.

4. An apparatus according to one of the preceding claims, **characterised in that**, viewed in the conveyance direction (15, 25; 115) of the tube (40), there are downstream of the respective deflecting and shaping means also means which render the layer (10', 20'; 110', 110") placed around the winding core taut in the peripheral direction of the winding core.

5. An apparatus according to claim 4, **characterised in that** the two longitudinal sides (20a, 20b) of each layer (10', 20') which is wrapped around the winding core are in the direction of an overlap (26) forced towards each other.

6. An apparatus according to claim 5, **characterised in that** for at least one longitudinal side (20a, 20b) of a layer (10', 20') placed around the winding core there is in each case a means acting in the direction of an overlap (26) of the two longitudinal sides (20a, 20b).

7. An apparatus according to claim 6, **characterised in that** as a means acting in the direction of an overlap (26), there is a rotatably mounted pressure applying roller (30a, 30b) which presses radially on the outside of a longitudinal side (20a, 20b) and which is inclined obliquely in relation to the direction of conveyance (15, 25).

8. An apparatus according to one of claims 5 to 7, **characterised in that** there is under a longitudinal side (20a, 20b) of a layer (10', 20') which is wrapped around the winding core a supporting surface (33a, 33b) in the region in which it is acted upon in the direction of an overlap (26).

9. An apparatus according to claim 4, **characterised in that**, viewed in the direction of conveyance (15, 25; 115) of the tube (40), the cross-section of the winding core widens out downstream of the deflecting and shaping means provided for the last layer (20'; 110', 110").

## Revendications

1. Dispositif (1 ; 101) pour fabriquer un tuyau flexible (40) formé par plusieurs couches (10', 20' ; 41, 42, 43, 44 ; 110', 110"), comportant un noyau d'enroulement stationnaire autour duquel les couches individuelles (10', 20'; 110', 110") amenées chacune sous forme de bande de matériau (10, 20 ; 110) sont enroulées en chevauchement par leurs deux côtés longitudinaux (20a, 20b) chacune au moyen d'un dispositif de renvoi et de formage, les couches (10', 20'; 110', 110") enroulées autour du noyau d'enroulement étant transportées sous forme de tuyau (40) en direction longitudinale du noyau d'enroulement en éloignement du dispositif (1 ; 101) et, en coupe, les médiatrices de chaque surface extérieure plane du noyau d'enroulement et les normales de chaque tangente posée contre une surface extérieure incurvée du noyau d'enroulement se recoupant en un point d'intersection commun, **caractérisé en ce que** le noyau d'enroulement est au moins partiellement, de préférence entièrement, entouré en direction périphérique par une anse de renvoi (12, 22 ; 112) formant le dispositif de renvoi et de formage, anse au moyen de laquelle une bande de matériau (10, 20; 110) amenée au noyau d'enroulement peut être rabattue autour de celui-ci pour former une couche (10', 20'; 110', 110").

2. Dispositif selon la revendication 1, **caractérisé en ce que** la section extérieure du noyau d'enroulement est réalisée du moins localement sous la forme d'un polygone régulier ou sous forme circulaire.

3. Dispositif l'une ou l'autre des revendications précédentes, **caractérisé en ce qu'**une bande de matériau (10, 20 ; 110) amenée en sens opposé à la direction de transport (15, 25 ; 115) peut être renvoyée (14, 24) par le dispositif de renvoi en direction de transport (15, 25 ; 115) de préférence sur plus de 90°.

4. Dispositif selon l'une quelconque des revendications précédentes, **caractérisé en ce que**, vu en direction de transport (15, 25 ; 115) du tuyau (40), des moyens sont prévus en aval du dispositif de renvoi et de formage respectif, qui tendent chacun une couche (10', 20' ; 110', 110"), rabattue autour du noyau d'enroulement, en direction périphérique du noyau d'enroulement.

5. Dispositif selon la revendication 4, **caractérisé en ce que** les deux côtés longitudinaux (20a, 20b) de chaque couche (10', 20') rabattue autour du noyau d'enroulement sont sollicités l'un vers l'autre par une force dans le sens d'un chevauchement (26).

6. Dispositif selon la revendication 5, **caractérisé en ce que** pour au moins un côté longitudinal (20a, 20b) de chaque couche (10', 20') rabattue autour du noyau d'enroulement, il est prévu un moyen respectif agissant dans le sens d'un chevauchement (26) des deux côtés longitudinaux (20a, 20b).

7. Dispositif selon la revendication 6, **caractérisé en ce qu'**il est prévu à titre de moyen agissant dans le sens d'un chevauchement (26), un rouleau presseur (30a, 30b) appuyant radialement depuis l'extérieur sur un côté longitudinal (20a, 20b), placé en oblique par rapport à la direction de transport et monté mobile en rotation.

8. Dispositif selon l'une quelconque des revendications 5 à 7, **caractérisé en ce qu'**au-dessous d'un côté longitudinal (20a, 20b) d'une couche (10', 20') rabattue autour du noyau d'enroulement, il est prévu une surface d'appui (33a, 33b) dans la zone de sa sollicitation dans le sens d'un chevauchement (26).

9. Dispositif selon la revendication 4, **caractérisé en ce que** la section du noyau d'enroulement, vue en direction de transport (15, 25 ; 115) du tuyau (40), va en s'élargissant en aval du dispositif de renvoi et de formage prévu pour la dernière couche (20' ; 110', 110").
